# EUROPEAN PATENT APPLICATION

(11) **EP 3 817 140 A1**
(43) Date of publication of application: **05.05.2021**
(21) Application number: 18925759.5
(22) Date of filing: 13.07.2018
(51) Int. Cl.: H01Q 1/38, H01Q 9/16

(54) **SUM AND DIFFERENCE MODE ANTENNA AND COMMUNICATION PRODUCT**

(71) Applicant: Huawei Technologies Co., Ltd., Longgang District Shenzhen, Guangdong 518129 (CN)
(72) Inventor: XU, Hang, Canterbury Kent CT2 7NT (GB); GAO, Steven, Canterbury Kent CT2 7NT (GB); ZHOU, Hai, Shenzhen, Guangdong 518129 (CN); WANG, Hanyang, Shenzhen, Guangdong 518129 (CN)
(74) Representative: Maiwald Patent- und Rechtsanwaltsgesellschaft mbH
(86) International application number: PCT/CN2018/095709
(87) International publication number: WO 2020/010636

(57) **Abstract**

This application relates to a sum and difference mode antenna, including a first radiator, a second radiator, a first excitation source, and a second excitation source. The first radiator includes a first segment and a second segment, a gap is formed between the first segment and the second segment, and the first excitation source is configured to feed the first radiator, so that currents in the first segment and the second segment both flow in a first direction. The second radiator includes a third segment, a fourth segment, and a fifth segment. The third segment and the fourth segment are symmetrically distributed on two sides of a connection end of the fifth segment, and the second excitation source is electrically connected to a feed end of the fifth segment to feed the second radiator, so that a current in the fifth segment flows in a second direction, a current in the third segment flows in a direction opposite to the first direction, a current in the fourth segment flows in the first direction, and an included angle is formed between the second direction and the first direction. The first radiator and the second radiator are disposed on two opposite sides of an insulating medium. This application has advantages of a compact structure and omnidirectional coverage of antenna signals.

## Description

### TECHNICAL FIELD

This application relates to the field of communications technologies, and in particular, to an antenna technology.

### BACKGROUND

With development of mobile communications technologies, communications products tend to be small-sized and multi-functional, and have limited internal space. For example, as a screen of a mobile phone becomes larger, space for an antenna decreases accordingly. However, it is difficult for a radiation pattern of a small-volume antenna to implement omnidirectional coverage. Therefore, an antenna with a compact structure and omnidirectional coverage is more urgently needed.

### SUMMARY

Embodiments of this application provide a sum and difference mode antenna, and have advantages of a compact structure and omnidirectional coverage.

According to an aspect, an embodiment of this application provides a sum and difference mode antenna, including a first radiator, a first excitation source, a second radiator, and a second excitation source. The first radiator includes a first segment and a second segment, and a gap is formed between the first segment and the second segment. The first excitation source is configured to feed the first radiator, and currents in the first segment and the second segment both flow in a first direction. The second radiator includes a third segment, a fourth segment, and a fifth segment. The fifth segment includes a feed end and a connection end away from the feed end, and the third segment and the fourth segment are symmetrically distributed and electrically connected on two sides of the connection end. The second excitation source is electrically connected to the feed end to feed the second radiator, a current in the fifth segment flows in a second direction, a current in the third segment flows in a direction opposite to the first direction, a current in the fourth segment flows in the first direction, and an included angle is formed between the second direction and the first direction. The first radiator and the second radiator are relatively disposed on two opposite sides of an insulating medium.

In this application, the currents in the first segment and the second segment of the first radiator both flow in the first direction, so that a difference mode antenna architecture is formed. The currents in the third segment and the fourth segment of the second radiator flow in opposite directions, and the current in the fifth segment of the second radiator flows in the second direction, so that a sum mode antenna architecture is formed. In this way, omnidirectional coverage can be implemented, and an advantage of a compact structure is achieved.

In an implementation, both the first segment and the second segment extend in the first direction, a first end and a second end that are relatively disposed in the first segment and a third end and a fourth end that are relatively disposed in the second segment are sequentially arranged in the first direction, the gap is formed between the third end and the second end, both the third segment and the fourth segment extend in the first direction, and the fifth segment extends in the second direction.

In this application, the first excitation source feeds the first segment and the second segment, so that the currents in the first segment and the second segment flow in a same direction. In an implementation, the first excitation source is electrically connected to the second segment, and directly feeds the second segment, so that the current in the second segment flows from the third end to the fourth end. In addition, the first segment is further excited through electromagnetic coupling by using the gap between the second segment and the first segment or in another coupling manner, so that the current in the first segment flows from the first end to the second end. In this way, it is ensured that the currents in the first segment and the second segment flow in a same direction. In another implementation, the first excitation source feeds a coaxial line. An inner conductor of the coaxial line is electrically connected to the second segment, an outer conductor of the coaxial line is electrically connected to the first segment and is grounded, the gap is still kept between the first segment and the second segment, and an electromagnetic field is formed between the outer conductor and the inner conductor. In such an architecture, the first segment and the second segment are simultaneously fed, and it is ensured that the currents in the first segment and the second segment flow in a same direction.

In this application, the first segment and the second segment of the first radiator that extend in a same direction are disposed, and the currents in the first segment and the second segment flow in a same direction, so that the first radiator and the first excitation source form a difference mode antenna. Current distribution of the difference mode antenna determines a radiation pattern of the antenna, and radiation fields of the first radiator are concentrated on two sides of the first radiator. In addition, the second radiator is disposed, so that the second radiator and the second excitation source form a sum mode antenna. In the second radiator, the currents in the third segment and the fourth segment that extend along the first direction flow in opposite directions, and radiation fields generated by the third segment and the fourth segment cancel each other out. A radiation pattern of the second radiator is affected by the fifth segment, and radiation fields of the second radiator are concentrated on two sides of the fifth segment. The fifth segment extends along the second direction, and the included angle is formed between the second direction and the first direction. In this way, in combination with radiation principles of the difference mode antenna and the sum mode antenna, the sum and difference mode antenna in this application has omnidirectional coverage performance.

The included angle between the first direction and the second direction may be set to be close to 90 degrees, or may be within a range near 90 degrees. For example, the included angle is 90 degrees. Assuming that the first direction is a horizontal direction, the second direction is a vertical direction, and distribution of a radiation pattern of the sum and difference mode antenna is as follows: Centered on the first radiator and the second radiator, the radiation pattern is distributed on an upper side and a lower side of the horizontal direction and a left side and a right side of the vertical direction, to form omnidirectional coverage.

In an implementation, the third segment, the fourth segment, and the fifth segment are coplanar and form a reference plane, and in a direction perpendicular to the reference plane, the connection end and the gap are relatively disposed on two sides of the insulating medium. The connection end directly faces the gap. In this implementation, all the parts of the second radiator are formed on a same plane, and a position of the connection end of the fifth segment directly faces a position of the gap of the first radiator, so that the first radiator and the second radiator are relatively disposed on the two opposite sides of the insulating medium. In this way, it can be ensured that the antenna provided in this application has a compact structure and occupies small space.

Specifically, the first segment and the second segment are also coplanar, and a plane on which the first segment and the second segment are located may be disposed in parallel with the reference plane. In a specific implementation, the first segment, the second segment, the third segment, the fourth segment, and the fifth segment are all in a strip line shape, which may be a rectangular strip shape. The first segment and the second segment are collinear, the third segment and the fourth segment are collinear, and the fifth segment is perpendicular to the third segment and the fourth segment. A size of an extension direction of each of the first segment, the second segment, the third segment, the fourth segment, and the fifth segment is a length thereof, and a size perpendicular to the extension direction of each of the first segment, the second segment, the third segment, the fourth segment, and the fifth segment is a width thereof. The widths of the first segment, the second segment, the third segment, and the fourth segment may be set to be equal, and the width of the fifth segment may be greater than the widths of the other four segments. Certainly, the width of the fifth segment may alternatively be the same as the widths of the other four segments. In another implementation, the first segment, the second segment, the third segment, the fourth segment, and the fifth segment may alternatively be set to be in another shape, for example, a long strip, a slender triangle, a slender trapezoid, a wavy linear extension, or a sawtooth extension. Electrical lengths thereof are specifically set based on a requirement on a frequency range of the antenna.

In an implementation, in the direction perpendicular to the reference plane, the first segment and the third segment are relatively disposed on the two sides of the insulating medium, and the second segment and the fourth segment are relatively disposed on the two sides of the insulating medium. The first segment directly faces the third segment, the second segment directly faces the fourth segment, a projection of the first segment on the reference plane has an overlapping area with the third segment, and a projection of the second segment on the reference plane has an overlapping area with the fourth segment.

Specifically, the first segment and the second segment are symmetrically disposed on two sides of the gap. The third segment and the fourth segment are also symmetrically disposed on the two sides of the gap. The radiators of the sum and difference mode antenna provided in this application are symmetrically distributed as a whole. This helps to form an ideal radiation pattern.

In a specific implementation, a length of the first segment is greater than a length of the third segment, and an extension range of the third segment is within a range of a projection of the first segment on the reference plane. Similarly, a length of the second segment is greater than a length of the fourth segment, and an extension range of the fourth segment is within a range of a projection of the second segment on the reference plane. In other words, an area of a vertical projection of the first segment on the reference plane is greater than an area of the third segment.

In an implementation, the second direction is perpendicular to the first direction, that is, the extension direction of the fifth segment is perpendicular to the first direction. In this way, the second radiator is in a T shape. Such an architecture arrangement facilitates a miniaturization design of an overall size of the sum and difference mode antenna, and has a relatively good radiation pattern.

In an implementation, the first excitation source includes a first feed line, the first feed line includes a first outer conductor and a first inner conductor, one end of the first outer conductor is electrically connected to the second end of the first segment, the first outer conductor extends along the second direction and is grounded, and the first inner conductor extends from a joint between the first outer conductor and the second end, and extends to and is electrically connected to the third end. Specifically, the first inner conductor crosses the gap between the first segment and the second segment, and is electrically connected to the third end of the second segment.

In an implementation, the sum and difference mode antenna provided in this application further includes a conductor that is insulated from the first outer conductor. One end of the conductor is electrically connected between the third end of the second segment and the first inner conductor, and the conductor extends along the second direction and is grounded. The conductor is disposed to form a symmetric structure with the first feed, so as to ensure overall symmetry of the sum and difference mode antenna and form a relatively good radiation pattern.

Specifically, the conductor is made of a metal material, the conductor is strip-shaped and disposed in parallel with the first outer conductor, and the conductor is insulated from the first outer conductor by using a gap. Certainly, another insulating medium may alternatively be disposed between the conductor and the first outer conductor, to ensure that the conductor is not in contact with the first outer conductor. In an implementation, a width of the gap formed between the conductor and the first outer conductor is less than or equal to a vertical distance between the second end and the third end. The width of the gap between the conductor and the first outer conductor is less than or equal to the vertical distance between the second end and the third end, so that a distance between the conductor and the first outer conductor is set as short as possible. In this way, the currents in the conductor and the first outer conductor can better cancel each other out, and it is ensured that radiation patterns of the first segment and the second segment are concentrated on two sides of an extension direction of the first radiator.

In an implementation, the sum and difference mode antenna further includes a connecting plate, and the connecting plate is perpendicular to the reference plane and is electrically connected between the feed end of the fifth segment and the second excitation source. Specifically, the connecting plate is disposed on a substrate, and the substrate may be a circuit board in a communications product. The connecting plate may be a microstrip disposed on the circuit board, the connecting plate is formed on an upper surface of the substrate, and a lower surface of the substrate is a grounded layer. The second excitation source passes through the substrate from one side of the lower surface of the substrate, and is electrically connected to the connecting plate. In another implementation, the connecting plate may alternatively be structure of a metal conducting wire or a metal sheet.

In an implementation, the second excitation source includes a second feed line, the second feed line includes a second outer conductor and a second inner conductor, the second inner conductor extends from one end of the second outer conductor and is electrically connected to the connecting plate, and the second outer conductor is grounded. Specifically, the second outer conductor is located on one side of the lower surface of the substrate on which the connecting plate is located, the second outer conductor is electrically connected to the grounded layer for grounding, and the second inner conductor passes through the substrate and is electrically connected to the connecting plate.

In an implementation, the insulating medium is a substrate layer of a circuit board, and the first radiator and the second radiator are microstrip structures disposed on two opposite sides of the substrate layer. Specifically, the insulating medium is located on an edge of the substrate on which the connecting plate is disposed, and is bent relative to the substrate. A plane on which the insulating medium is located may be perpendicular to the substrate. When the substrate is specifically applied to a communications product, the substrate may be a mainboard in the communications product. In this way, the sum and difference mode antenna provided in this application is disposed on the insulating medium on the edge of the mainboard, and occupies space on a bezel of the communications product. In addition, the sum and difference mode antenna provided in this application has an advantage of a compact volume. This facilitates a miniaturization design of the communications product.

According to another aspect, this application provides a communications product, including the above described sum and difference mode antenna and a radio frequency module. The first excitation source and the second excitation source are electrically connected to the radio frequency module. The radio frequency module is configured to process an electromagnetic wave signal of the sum and difference mode antenna. The communications product may be a communications device such as a mobile phone, a notebook computer, a router, or a base station.

In an implementation, the communications product further includes a mounting plate on which an upper surface and a lower surface are disposed (the mounting plate and the above described substrate on which the connecting plate is disposed may be a same element), and the insulating medium bends and extends from an edge of the mounting plate towards a side of the upper surface. A grounded layer is disposed on the lower surface, a grounded part is disposed on the mounting plate, and the grounded part extends on the upper surface and extends to the grounded layer on the lower surface through the mounting plate. The second radiator is electrically connected to the grounded part for grounding by using the fifth segment. The mounting plate may be a mainboard in the communications product, and the radio frequency module may be disposed on the mounting plate.

In an implementation, there are N sum and difference mode antennas, which are distributed on a pair of relatively disposed sides of the mounting plate, to form 2Nx2N MIMO antennas in the communications product.

### BRIEF DESCRIPTION OF DRAWINGS

FIG. 1 is a schematic diagram of a communications product with a sum and difference mode antenna according to this application;
FIG. 2 is a partial three-dimensional schematic diagram of a sum and difference mode antenna according to an implementation of this application;
FIG. 3 is a partial three-dimensional schematic diagram of a sum and difference mode antenna according to an implementation of this application;
FIG. 4 is a partial three-dimensional schematic diagram of a sum and difference mode antenna according to an implementation of this application, where the sum and difference mode antenna does not include an insulating medium;
FIG. 5 is a partial three-dimensional schematic diagram of a sum and difference mode antenna according to an implementation of this application, where the sum and difference mode antenna does not include an insulating medium;
FIG. 6 is a schematic diagram of applying a sum and difference mode antenna to a communications product according to an implementation of this application;
FIG. 7 is a partially enlarged schematic diagram of FIG. 6;
FIG. 8 is a sectional view of a sum and difference mode antenna according to an implementation of this application; and
FIG. 9 is a schematic diagram of applying a sum and difference mode antenna to a communications product according to an implementation of this application.

### DESCRIPTION OF EMBODIMENTS

The following describes the embodiments of the present invention with reference to accompanying drawings.

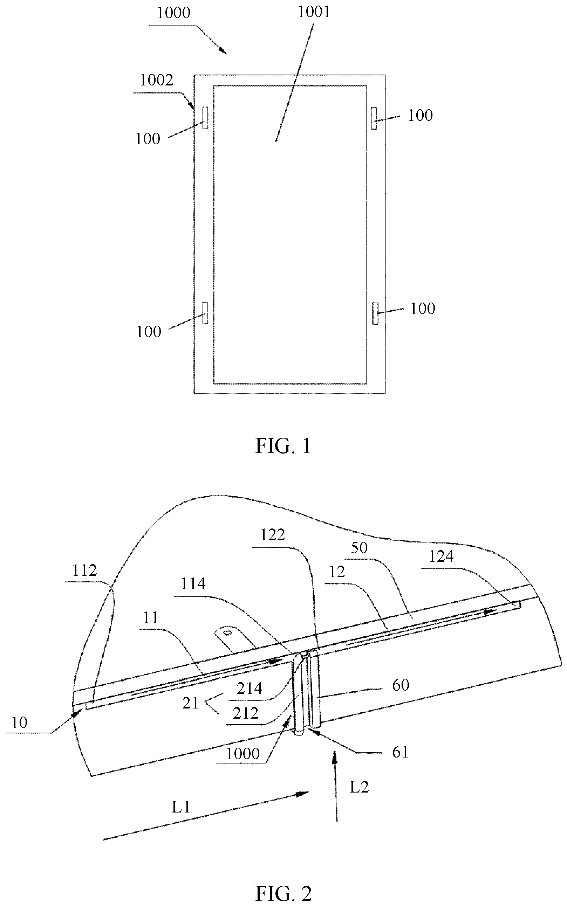

The embodiments of this application provide a sum and difference mode antenna. "Sum and difference mode" means that the antenna includes both a radiator configured to implement a sum mode antenna, and a radiator configured to implement a difference mode antenna. The sum mode antenna is combined with the difference mode antenna, so that the sum and difference mode antenna is applied to a communications product, and has advantages of a compact structure and omnidirectional coverage. As shown in FIG. 1, a mobile phone is used as an example of the communications product. A requirement on a screen-to-body ratio of the mobile phone 1000 is increasingly high, and space for an antenna on the mobile phone 1000 with a large screen is limited. The sum and difference mode antenna 100 provided in this application may be disposed in narrow space between a screen 1001 and a bezel 1002 of the mobile phone, and omnidirectional coverage can be implemented. Specifically, the bezel of the mobile phone 1000 includes a long side and a short side. In an implementation, the sum and difference mode antenna 100 is disposed between the screen 1001 of the mobile phone and the long side, and the sum and difference mode antenna 100 is disposed at a location close to the short side. In this way, radiation performance of the sum and difference mode antenna 100 can be prevented from being affected because a user holds the sum and difference mode antenna 100 when using the mobile phone. The communications product may alternatively be a communications device such as a notebook computer, a router, or a base station.

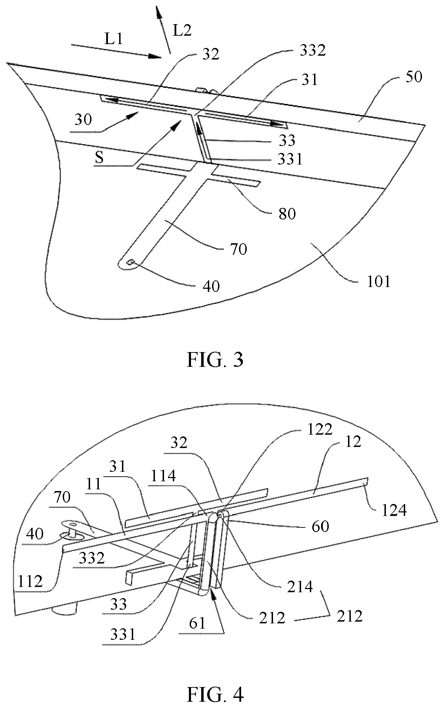

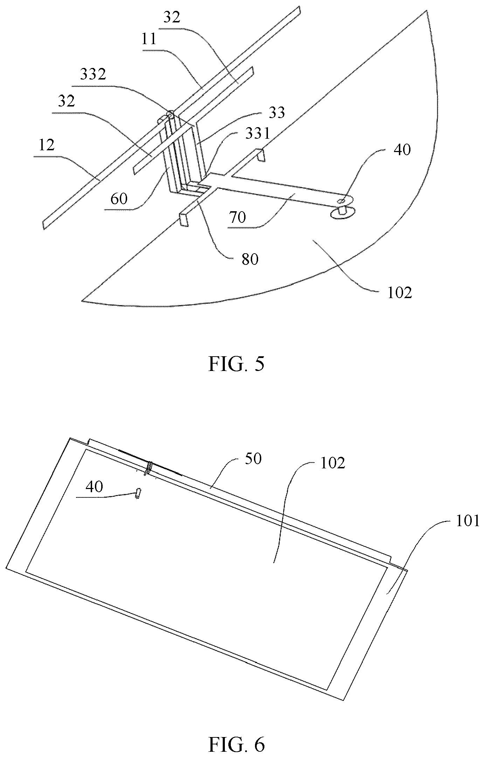

Referring to FIG. 2, FIG. 3, FIG. 4, and FIG. 5, FIG. 2 and FIG. 3 are three-dimensional diagrams of the sum and difference mode antenna that are presented from different angles, and FIG. 4 and FIG. 5 are schematic diagrams in which an insulating medium is omitted and only radiators of the antenna are retained based on FIG. 2 and FIG. 3, to help check a correspondence between radiators.

The sum and difference mode antenna 100 provided in the embodiments of this application includes a first radiator 10, a first excitation source 20, a second radiator 30, and a second excitation source 40. The first radiator 10 and the first excitation source 20 form a difference mode antenna, and the second radiator 30 and the second excitation source 40 form a sum mode antenna.

As shown in FIG. 2, the first radiator 10 includes a first segment 11 and a second segment 12, and extension directions of the first segment 11 and the second segment 12 each are a first direction LI. A first end 112 and a second end 114 that are relatively disposed in the first segment 11 and a third end 122 and a fourth end 124 that are relatively disposed in the second segment 12 are sequentially arranged in the first direction L1, and a gap is formed between the third end 122 and the second end 114. The first excitation source 20 is configured to feed the first radiator 10, and currents in the first segment 11 and the second segment 12 flow in the first direction L1. As shown in FIG. 2, directions of marking lines with arrows in the first segment 11 and the second segment 12 represent current directions. In an implementation, the first excitation source 20 is electrically connected to the second segment 12 and the third end 122, and directly feeds the second segment 12, so that the current in the second segment 12 flows from the third end 122 to the fourth end 124. In addition, the first segment 11 is further excited through electromagnetic coupling by using the gap between the second segment 12 and the first segment 11 (that is, the gap formed between the third end 122 and the second end 144) or in another coupling manner, so that the current in the first segment 11 flows from the first end 112 to the second end 114. In this way, it is ensured that the currents in the first segment 11 and the second segment 12 flow in a same direction. In another implementation, the first excitation source 20 feeds a coaxial line. An inner conductor of the coaxial line is electrically connected to the second segment 12, an outer conductor of the coaxial line is electrically connected to the first segment 11 and is grounded, the gap is still kept between the first segment 11 and the second segment 12, and an electromagnetic field is formed between the outer conductor and the inner conductor. In such an architecture, the first segment 11 and the second segment 12 are simultaneously fed, and it is ensured that the currents in the first segment 11 and the second segment 12 flow in a same direction.

As shown in FIG. 3, the second radiator 30 includes a third segment 31 and a fourth segment 32 whose extension directions are both the first direction L1, and a fifth segment 33 whose extension direction is a second direction L2. An included angle is formed between the second direction L2 and the first direction L1. The fifth segment 33 includes a feed end 331 and a connection end 332 away from the feed end 331, and the third segment 31 and the fourth segment 32 are symmetrically distributed and electrically connected on two sides of the connection end 332. The second excitation source 40 is electrically connected to the feed end 331 to feed the second radiator 30, and a current in the fifth segment 33 flows in the second direction L2, and flows from the feed end 331 to the connection end 332. In FIG. 3, a direction of a marking line with an arrow in the fifth segment 33 represents a current direction. A current in the third segment 31 flows in a direction opposite to the first direction L1, and a current in the fourth segment 32 flows in the first direction L1. In FIG. 3, directions of marking lines with arrows in the third segment 31 and the fourth segment 32 represent current directions.

As shown in FIG. 2 and FIG. 3, the first radiator 10 and the second radiator 30 are relatively disposed on two opposite sides of an insulating medium 50. The insulating medium 50 may be a substrate of a circuit board, and the first radiator 10 and the second radiator 30 are formed on the two opposite sides of the insulating medium 50 by using a circuit board printing process. In an implementation, a thickness of the insulating medium 50 is 2 mm or less, and the thickness herein is a size in a direction perpendicular to surfaces of the insulating medium on which the first radiator 10 and the second radiator 30 are disposed. A height of the insulating medium 50 is 5 mm or less, and the height herein is a size extending in the second direction L2. It can be learned that the insulating medium 50 may be in a slender and long strip shape, and is placed in a gap between the screen and the bezel of the mobile phone.

In this application, the first segment 11 and the second segment 12 of the first radiator 10 that extend in a same direction (that is, extend along the first direction L1) are disposed, and the currents in the first segment 11 and the second segment 12 flow in a same direction, so that the first radiator 10 and the first excitation source 20 form a difference mode antenna. Current distribution of the difference mode antenna determines a radiation pattern of the antenna, and radiation fields of the first radiator 10 are concentrated on two sides of the first radiator 10 that are perpendicular to the first direction L1. In addition, the second radiator 30 is disposed, so that the second radiator 30 and the second excitation source 40 form a sum mode antenna. In the second radiator 30, the currents in the third segment 31 and the fourth segment 32 that extend along the first direction L1 flow in opposite directions, and radiation fields generated by the third segment 31 and the fourth segment 32 cancel each other out. A radiation pattern of the second radiator 30 is affected by the fifth segment 33, and radiation fields of the second radiator 30 are concentrated on two sides of the fifth segment 33 that are perpendicular to the second direction L2. The fifth segment 33 extends along the second direction L2, and the included angle is formed between the second direction L2 and the first direction L1. In this way, in combination with radiation principles of the difference mode antenna and the sum mode antenna, the sum and difference mode antenna 100 in this application has omnidirectional coverage performance.

The included angle between the first direction L1 and the second direction L2 may be set to be equal to or close to 90 degrees, or may be within a range near 90 degrees. For example, the included angle is 90 degrees. Assuming that the first direction L1 is a horizontal direction, the second direction L2 is a vertical direction, and distribution of a radiation pattern of the sum and difference mode antenna in this application is as follows: Centered on the first radiator and the second radiator, the radiation pattern is distributed on an upper side and a lower side of the horizontal direction and a left side and a right side of the vertical direction, to form omnidirectional coverage.

As shown in FIG. 3, in an implementation, the third segment 31, the fourth segment 32, and the fifth segment 33 are coplanar and form a reference plane S (that is, a plane pointed to by an arrow S in FIG. 3 is the reference plane). In a direction perpendicular to the reference plane S, the connection end 332 directly faces the gap between the first segment 11 and the second segment 12. In this implementation, all the parts of the second radiator 30 are formed on a same plane, and a position of the connection end 332 of the fifth segment 33 directly faces a position of the gap of the first radiator 10, so that the first radiator 10 and the second radiator 30 are relatively disposed on the two opposite sides of the insulating medium 50. In this way, it can be ensured that the antenna provided in this application has a compact structure and occupies small space.

The first radiator 10 is also formed on one plane, in other words, the first segment 11 and the second segment 12 are also coplanar, and a plane on which the first segment 11 and the second segment 12 are located may be disposed in parallel with the reference plane S. In a specific implementation, the first segment 11, the second segment 12, the third segment 31, the fourth segment 32, and the fifth segment 33 are all in a strip line shape, which may be a strip shape. The first segment 11 and the second segment 12 are collinear, the third segment 31 and the fourth segment 32 are collinear, and the fifth segment 33 is perpendicular to the third segment 31 and the fourth segment 32. A size of an extension direction of each of the first segment 11, the second segment 12, the third segment 31, the fourth segment 32, and the fifth segment 33 is a length thereof, and a size perpendicular to the extension direction of each of the first segment 11, the second segment 12, the third segment 31, the fourth segment 32, and the fifth segment 33 is a width thereof. The widths of the first segment 11, the second segment 12, the third segment 31, and the fourth segment 32 may be set to be equal, and the width of the fifth segment 33 may be greater than the widths of the other four segments. Certainly, the width of the fifth segment 33 may alternatively be the same as the widths of the other four segments. In another implementation, the first segment 11, the second segment 12, the third segment 31, the fourth segment 32, and the fifth segment 33 may alternatively be set to be in another shape, for example, a strip shape, a slender triangle, a slender trapezoid, a wavy linear extension, or a sawtooth extension, to meet an extension trend of each segment (to be specific, a general extension trend is the above described extension in the first direction or extension in the second direction). Electrical lengths thereof are specifically set based on a requirement on a frequency range of the antenna. Shapes of the segments of the first radiator 10 and the second radiator 30 are not limited in this application, provided that the currents flow therein can be ensured as such: the currents in the first segment 11 and the second segment 12 flow in the first direction L1, the current in the third segment 31 flows in the direction opposite to the first direction, the current in the fourth segment 32 flows in the first direction L1, and the current in the fifth segment 33 flows in the second direction. In this way, omnidirectional coverage in this application can be implemented.

In an implementation, with reference to FIG. 3, FIG. 4, and FIG. 5, in the direction perpendicular to the reference plane S, the first segment 11 directly faces the third segment 31, and the second segment 12 directly faces the fourth segment 32. A projection of the first segment 11 on the reference plane has an overlapping area with the third segment 31, and a projection of the second segment 12 on the reference plane S has an overlapping area with the fourth segment 32.

Specifically, the first segment 11 and the second segment 12 are symmetrically disposed on two sides of the gap. The third segment 31 and the fourth segment 32 are also symmetrically disposed on the two sides of the gap. The radiators of the sum and difference mode antenna provided in this application are symmetrically distributed as a whole. This helps to form an ideal radiation pattern.

A length of the first segment 11 is greater than a length of the third segment 31, and an extension range of the third segment 31 is within a range of a projection of the first segment 11 on the reference plane. Similarly, a length of the second segment 12 is greater than a length of the fourth segment 32, and an extension range of the fourth segment 32 is within a range of a projection of the second segment 12 on the reference plane. In other words, an area of a vertical projection of the first segment 11 on the reference plane is greater than an area of the third segment 31, and an area of a vertical projection of the second segment 12 on the reference plane is greater than an area of the fourth segment 32.

In an implementation, the second direction L2 is perpendicular to the first direction L1, that is, the extension direction of the fifth segment 33 is perpendicular to the first direction L1. In this way, the second radiator 30 is in a T shape. Such an architecture arrangement facilitates a miniaturization design of an overall size of the sum and difference mode antenna 100, and has a relatively good radiation pattern.

In an implementation, as shown in FIG. 2 and FIG. 4, the first excitation source 20 includes a first feed line 21, the first feed line 21 is a radio frequency coaxial line, and the first feed line 21 includes a first outer conductor 212 and a first inner conductor 214. One end of the first outer conductor 212 is electrically connected to the second end 114 of the first segment 11, the first outer conductor 212 extends along the second direction L2 and is grounded, and the first inner conductor 214 extends from a joint between the first outer conductor 212 and the second end 114, and extends to and is electrically connected to the third end 122. Specifically, the first inner conductor 214 crosses the gap between the first segment 11 and the second segment 12, and is electrically connected to the third end 122 of the second segment 12.

In an implementation, the sum and difference mode antenna provided in this application further includes a conductor 60 that is insulated from the first outer conductor 212, and the conductor 60 is configured to form a symmetric structure with the first outer conductor 212 of the first feed line 21. A current flow direction in the conductor 60 is opposite to a current flow direction in the first outer conductor 212. One end of the conductor 60 is electrically connected between the third end 122 of the second segment 12 and the first inner conductor 214, and the conductor 60 extends along the second direction L2 and is grounded.

Specifically, the conductor 60 is made of a metal material, and the conductor 60 is strip-shaped and disposed in parallel with the first outer conductor 212. As shown in FIG. 2 and FIG. 4, the conductor 60 is insulated from the first outer conductor 212 by using a gap 61. Certainly, another insulating medium may alternatively be disposed between the conductor 60 and the first outer conductor 212, to ensure that the conductor 60 is not in contact with the first outer conductor 212. In an implementation, a width of the gap 61 formed between the conductor 60 and the first outer conductor 212 is less than or equal to a vertical distance between the second end 114 and the third end 122. The width of the gap 61 is less than or equal to the vertical distance between the second end 114 and the third end 122, so that a distance between the conductor 60 and the first outer conductor 212 may be set as short as possible. Because the current flow direction in the conductor 60 is opposite to the current flow direction in the first outer conductor 212, the currents in the conductor 60 and the first outer conductor 212 can better cancel each other out, and it is ensured that radiation patterns of the first segment 11 and the second segment 12 are concentrated on two sides of an extension direction of the first radiator 10.

In an implementation, the sum and difference mode antenna further includes a connecting plate 70, and the connecting plate 70 is perpendicular to the reference plane and is electrically connected between the feed end 331 of the fifth segment 33 and the second excitation source 40.

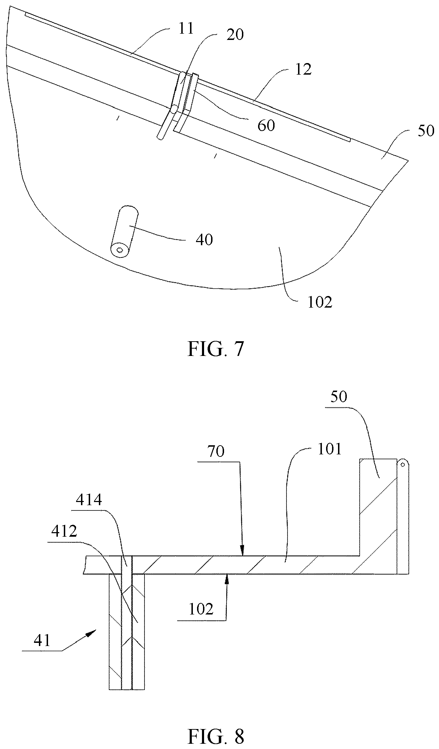

As shown in FIG. 3 and FIG. 8, specifically, the connecting plate 70 is disposed on a substrate 101, and the substrate 101 may be a circuit board in a communications product. The connecting plate 70 may be a microstrip disposed on the circuit board, and the connecting plate 70 is formed on an upper surface of the substrate 101. As shown in FIG. 6 and FIG. 7, a lower surface of the substrate 101 is a grounded layer 102, and the second excitation source 40 passes through the substrate 101 from one side of the lower surface of the substrate 101, and is electrically connected to the connecting plate 70. As shown in FIG. 3 and FIG. 5, a grounded part 80 is further disposed on the upper surface of the substrate 101, the grounded part 80 extends on the upper surface and extends to the grounded layer 102 on the lower surface through the substrate 101, and the second radiator 30 is electrically connected to the grounded part 80 for grounding by using the fifth segment 33. The grounded part 80 is a metal structure symmetrically distributed on two sides of the connecting plate 70. In an implementation, the grounded part 80 and the connecting plate 70 form a cross-shaped structure.

Referring to FIG. 8, in an implementation, the second excitation source 40 includes a second feed line 41, the second feed line 41 includes a second outer conductor 412 and a second inner conductor 414, and the second inner conductor 414 extends from one end of the second outer conductor 412, passes through the substrate 101, and is electrically connected to the connecting plate 70. Specifically, a through hole is disposed on the substrate 101, so that the second inner conductor 414 passes through the substrate 101. The second outer conductor 412 is grounded. Specifically, the second outer conductor 412 is located on one side of the lower surface of the substrate 101 on which the connecting plate is located, and the second outer conductor 412 is electrically connected to the grounded layer 102 for grounding.

In an implementation, the insulating medium 50 is a substrate layer of the circuit board, and a material of the insulating medium 50 may be the same as that of the substrate 101. The first radiator 10 and the second radiator 30 are microstrip structures disposed on two opposite sides of the insulating medium 50. Specifically, the insulating medium 50 is located on an edge of the substrate 101 on which the connecting plate 70 is disposed, and is bent relative to the substrate 101. A plane on which the insulating medium 50 is located may be perpendicular to the substrate 101. When the substrate 101 is specifically applied to a communications product, the substrate 101 may be a mainboard in the communications product. In this way, the sum and difference mode antenna provided in this application is disposed on the insulating medium on the edge of the mainboard, and occupies space on a bezel of the communications product. In addition, the sum and difference mode antenna provided in this application has an advantage of a compact volume. This facilitates a miniaturization design of the communications product.

The sum and difference mode antenna provided in the implementations of this application is applied to a mobile phone, a reflection coefficient of the sum and difference mode antenna is less than -10 dB, and a coupling coefficient of the sum and difference mode antenna is less than -20 dB. For the mobile phone, such ranges of the reflection coefficient and the coupling coefficient are acceptable. In other words, the sum and difference mode antenna can maintain good radiation performance.

According to the sum and difference mode antenna provided in this application, the first radiator 10 and the first excitation source 20 form the difference mode antenna, and currents in the difference mode antenna are concentrated on the first radiator 10 extending in the first direction L1. The second radiator 30 and the second excitation 40 source form the sum mode antenna, and currents in the sum mode antenna are concentrated on the fifth segment 33 of the second radiator 30 extending in the second direction L2. It is assumed that the first direction L1 is a horizontal direction, and the second direction L2 is a vertical direction. It can be learned that radiation patterns of the difference mode antenna and the sum mode antenna are complementary in space, in other words, a direction in which the sum mode antenna has a maximum radiation value is a direction in which the difference mode antenna has a minimum radiation value. In this way, omnidirectional coverage of electromagnetic wave signals can be implemented.

A communications product provided in this application includes the above described sum and difference mode antenna and a radio frequency module. The first excitation source and the second excitation source are electrically connected to the radio frequency module.

In an implementation, the communications product further includes a mounting plate on which an upper surface and a lower surface are disposed (the mounting plate and the above described substrate 101 on which the connecting plate 70 is disposed may be a same component, or the mounting plate is a support supporting the substrate 101), and the insulating medium 50 bends and extends from an edge of the mounting plate towards a side of the upper surface. A grounded layer is disposed on the lower surface, a grounded part 80 is disposed on the mounting plate, and the grounded part 80 extends on the upper surface and extends to the grounded layer on the lower surface through the mounting plate. The second radiator 30 is electrically connected to the grounded part 80 for grounding by using the fifth segment 33. The grounded part 80 is a metal structure symmetrically distributed on two sides of the connecting plate 70. In an implementation, the grounded part 80 and the connecting plate 70 form a cross-shaped structure.

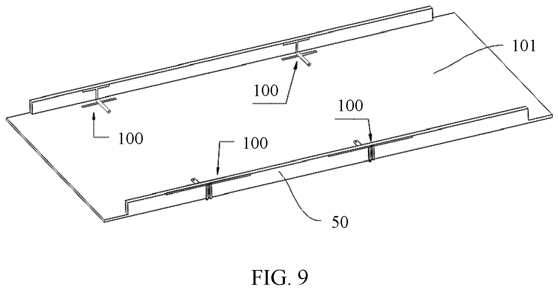

As shown in FIG. 9, in an implementation, there are N sum and difference mode antennas, which are distributed on a pair of relatively disposed sides of the mounting plate, to form 2Nx2N MIMO antennas in the communications product. In FIG. 9, there are four sum and difference mode antennas, and 8x8 MIMO antennas are formed in the communications product.

The sum and difference mode antenna provided in the embodiments of this application is described in detail above. Specific examples are used in this specification to describe the principle and embodiments of this application, and the description of the embodiments is merely intended to help understand the method and core idea of this application. In addition, a person of ordinary skill in the art may make modifications to this application in terms of the specific embodiments and the application scope according to the idea of this application. Therefore, the content of this specification shall not be construed as a limitation to this application.

## Claims

1. A sum and difference mode antenna, comprising:
a first radiator, comprising a first segment and a second segment, wherein a gap is formed between the first segment and the second segment;
a first excitation source, configured to feed the first radiator, wherein currents in the first segment and the second segment both flow in a first direction;
a second radiator, comprising a third segment, a fourth segment, and a fifth segment, wherein the fifth segment comprises a feed end and a connection end away from the feed end, and the third segment and the fourth segment are symmetrically distributed and electrically connected on two sides of the connection end; and
a second excitation source, electrically connected to the feed end to feed the second radiator, wherein a current in the fifth segment flows in a second direction, a current in the third segment flows in a direction opposite to the first direction, a current in the fourth segment flows in the first direction, and an included angle is formed between the second direction and the first direction, wherein
the first radiator and the second radiator are relatively disposed on two opposite sides of an insulating medium.

2. The sum and difference mode antenna according to claim 1, wherein both the first segment and the second segment extend in the first direction, a first end and a second end that are relatively disposed in the first segment and a third end and a fourth end that are relatively disposed in the second segment are sequentially arranged in the first direction, the gap is formed between the third end and the second end, both the third segment and the fourth segment extend in the first direction, and the fifth segment extends in the second direction.

3. The sum and difference mode antenna according to claim 2, wherein the third segment, the fourth segment, and the fifth segment are coplanar and form a reference plane, and in a direction perpendicular to the reference plane, the connection end and the gap are relatively disposed on two sides of the insulating medium.

4. The sum and difference mode antenna according to claim 3, wherein in the direction perpendicular to the reference plane, the gap directly faces the connection end.

5. The sum and difference mode antenna according to claim 3, wherein in the direction perpendicular to the reference plane, the first segment and the third segment are relatively disposed on the two sides of the insulating medium, and the second segment and the fourth segment are relatively disposed on the two sides of the insulating medium.

6. The sum and difference mode antenna according to any one of claims 3 to 5, wherein the first segment and the second segment are symmetrically disposed on two sides of the gap.

7. The sum and difference mode antenna according to any one of claims 3 to 6, wherein an area of a vertical projection of the first segment on the reference plane is greater than an area of the third segment.

8. The sum and difference mode antenna according to any one of claims 1 to 7, wherein the second direction is perpendicular to the first direction.

9. The sum and difference mode antenna according to any one of claims 2 to 6, wherein the first excitation source comprises a first feed line, the first feed line comprises a first outer conductor and a first inner conductor, one end of the first outer conductor is electrically connected to the second end of the first segment, the first outer conductor extends along the second direction and is grounded, and the first inner conductor extends from a joint between the first outer conductor and the second end, and extends to and is electrically connected to the third end.

10. The sum and difference mode antenna according to claim 9, further comprising a conductor that is insulated from the first outer conductor, wherein one end of the conductor is electrically connected between the third end of the second segment and the first inner conductor, and the conductor extends along the second direction and is grounded.

11. The sum and difference mode antenna according to claim 10, wherein the conductor is parallel to the outer conductor, a gap is formed between the conductor and the outer conductor, and a width of the gap is less than or equal to a vertical distance between the second end and the third end.

12. The sum and difference mode antenna according to any one of claims 3 to 11, wherein the sum and difference mode antenna further comprises a connecting plate, and the connecting plate is perpendicular to the reference plane and is electrically connected between the feed end of the fifth segment and the second excitation source.

13. The sum and difference mode antenna according to claim 12, wherein the second excitation source comprises a second feed line, the second feed line comprises a second outer conductor and a second inner conductor, the second inner conductor extends from one end of the second outer conductor and is electrically connected to the connecting plate, and the second outer conductor is grounded.

14. The sum and difference mode antenna according to any one of claims 1 to 13, wherein the insulating medium is a substrate layer of a circuit board, and the first radiator and the second radiator are microstrip structures disposed on two opposite sides of the substrate layer.

15. A communications product, comprising the sum and difference mode antenna according to any one of claims 1 to 14 and a radio frequency module, wherein the first excitation source and the second excitation source are electrically connected to the radio frequency module.

16. The communications product according to claim 15, wherein the communications product further comprises a mounting plate, the mounting plate comprises an upper surface and a lower surface, and the insulating medium bends and extends from an edge of the mounting plate towards a side of the upper surface.

17. The communications product according to claim 14, wherein a grounded layer is disposed on the lower surface, a grounded part is disposed on the mounting plate, and the grounded part extends on the upper surface and extends to the grounded layer on the lower surface through the mounting plate.

18. The communications product according to any one of claims 15 to 17, wherein the number of the sum and difference mode antennas is N, and the N antennas are distributed on a pair of relatively disposed sides of the mounting plate, to form 2Nx2N MIMO antennas in the communications product.
